# EUROPÄISCHE PATENTSCHRIFT

(11) **EP 0 445 582 B1**
(45) Veröffentlichungstag und Bekanntmachung des Hinweises auf die Patenterteilung: **09.08.1995**
(21) Anmeldenummer: 91102441.2
(22) Anmeldetag: 20.02.1991
(51) Int. Cl.: A01B 49/06

(54) **Bodenbearbeitungsgerät**
Groundworking implement
Machine pour travailler le sol

(30) Priorität: 08.03.1990 DE 9002699 U
(43) Veröffentlichungstag der Anmeldung: 11.09.1991
(73) Patentinhaber: Rabewerk GmbH + Co., 49152 Bad Essen (DE)
(72) Erfinder: Warnking, Richard, Dipl.-Ing., W-4515 Bad Essen (DE)
(74) Vertreter: Missling, Arne, Dipl.-Ing.

(56) Entgegenhaltungen:
- AU-B- 542 978
- DE-A- 3 705 952
- DE-U-89 131 711
- FR-A- 2 296 366
- FR-A- 2 521 817

## Beschreibung

Die Erfindung bezieht sich auf ein Bodenbearbeitungsgerät mit einer Walze, welche mehrere radartige Walzenelemente umfaßt, welche jeweils mittels eines ersten Tragelementes höhenveränderbar an einem Rahmen gelagert sind, und mit einer nachgeordneten, mit Mitteln zur Saatgutablage versehenen Sämaschine.

Bodenbearbeitungsmaschinen der genannten Art werden verwendet, um den mittels einer üblicherweise zapfwellenbetriebenen Bodenbearbeitungsmaschine zu einem Saatbeet vorbereiteten Boden in gezielter Weise zu verfestigen und um das Saatgut einzubringen. Während es früher üblich war, mittels einer im wesentlichen einen Zylindermantel aufweisenden Walze den Boden über die gesamte Arbeitsbreite zu verdichten, hat es sich als günstig herausgestellt, mittels radartiger einzelner Walzenelemente den Boden lediglich dort zu verdichten, wo dies erforderlich ist. Diese Vorgehensweise ist sowohl im Hinblick auf den Wasserhaushalt des Bodens als auch im Hinblick auf das Gesamtgewicht des Bodenbearbeitungsgerätes günstig. Es ist somit möglich, das Saatgut gezielt in die durch die Walzenelemente optimal verdichteten Bodenstreifen einzubringen, während die benachbarten Bodenstreifen sich in dem unverdichteten Zustand befinden. Alternativ dazu kann das Saatgut auch in nicht verdichtete Bodenbereiche eingebracht werden, während die benachbarten Walzenelemente den Boden verfestigen.

Ein weiterer Vorteil bei diesen bekannten Bodenbearbeitungsgeräten besteht darin, daß die Verfestigung des Bodens in gleichmäßigerer und gezielterer Weise erfolgen kann, als bei einer gleichmäßigen Verfestigung des Bodens über die gesamte Arbeitsbreite, so wie dies bei Walzen mit Zylindermantel üblich ist.

Aus der DE-PS 8350 ist eine Drillwalze für Rübenkultur vorbekannt, bei welcher die Walzenelemente jeweils einzeln gelagert sind. In den von diesen Rädern verdichteten Streifen kann mittels Säscharen Saatgut abgelegt werden.

Aus der DE-OS 37 05 952 ist eine aus auf einer gemeinsamen Achse angeordneten Einzelrädern bestehende Bodenwalze bekannt, bei welcher jedem durch die Einzelräder verdichteten Streifen ein Säschar zugeordnet ist. Bei diesem Gerät liegt eine bestimmte, nicht beeinflußbare Zuordnung zwischen der Arbeitstiefe, in welcher das Saatgut abgelegt wird und der Eindringtiefe der Räder der Bodenwalze vor.

Eine aus einzelnen Rädern, welche unabhängig voneinander federn bzw. ausweichen können, bestehende Walze ist weiterhin aus der DE-OS 25 28 930 bekannt. Die durch die Räder erfolgende Bodenverdichtung ist jedoch nicht gleichmäßig, weiterhin ist keine gezielte Zuordnung der durch die Räder verdichteten Streifen zu einer Sämaschine oder zu Mitteln zur Saatgutablage gegeben.

Eine Zuordnung von Säscharen zu einer vorauslaufenden Walze ist aus der DE-OS 34 07 501 vorbekannt, wobei die Walze eine geschlossene Umfangsfläche aufweist. Die Säschare können zum Ausweichen von Hindernissen nach hinten bewegt werden.

Die DE-OS 35 33 820 zeigt eine Walze, welche aus einzelnen Rädern besteht. Diese sind jedoch auf einer gemeinsamen Achse angeordnet, so daß das einzelne Rad zur Erzeugung einer vorgegebenen Bodenverdichtung nicht höhenverstellbar und nicht höhenbeweglich ist. Demgegenüber sind die nachfolgenden Säschare höhenbeweglich am Tragrahmen der Nachlaufwalze gelagert, so daß die Einbringtiefe des Saatgutes nicht eingestellt werden kann.

Die vorbekannten Bodenbearbeitungsgeräte weisen allesamt den Nachteil auf, daß es zwar möglich ist, das Saatgut in einzelne, verdichtete Streifen des zu bearbeitenden Bodens einzulegen, daß jedoch zum einen die Eindringtiefe der Walzenelemente ungenügend und damit das Maß der Verdichtung des Bodens nicht unabhängig vorwählbar ist und daß zum anderen die Ablagetiefe des Saatgutes nicht in gezielter Weise einstellbar ist.

Bei einer Einrichtung entsprechend DE-Gebrauchsmuster 89 13 171 und gemäß der Oberbegriff des Patentanspruchs 1, können die Säschare nur gemeinsam bewegt werden, so daß bei Störungen an einer singulären Bodenstelle die Aussaat breitflächig unterbrochen werden kann.

Der Erfindung liegt somit die Aufgabe zugrunde, ein Bodenbearbeitungsgerät der eingangs genannten Art zu schaffen, welches bei einfachem Aufbau und einfacher, betriebssicherer Anwendbarkeit eine höhenmäßige Zuordnung der Säschare zu den Walzenelementen ermöglicht, wobei sowohl die Eindringtiefe der Walzenelemente als auch die Tiefe der Saatgutablage präzise voreinstellbar sind. Erfindungsgemäß wird die Aufgabe durch die Merkmale des Patentanspruchs 1 gelöst.

Das erfindungsgemäße Bodenbearbeitungsgerät zeichnet sich durch eine Reihe erheblicher Vorteile aus. Da die beiden Tragelemente jeweils mittels eines elastischen Elementes unter Anlage gegen einen Anschlag in Richtung auf den Boden vorgespannt sind, befinden sich diese stets in einer vorgegebenen Tiefe relativ zur Walze, es sei denn, daß entweder das Walzenelement oder das Mittel zur Saatgutablage, beispielsweise ein Säschar, auf ein Hindernis auftreffen. In diesem Falle kann das jeweilige Tragelement nach oben ausweichen, um eine Beschädigung des Gerätes zu vermeiden, während benachbarte Walzenelemente oder Saatgutablagemittel nicht in ihrer Funktionsweise beeinträchtigt werden. Somit ist es möglich, die Eindringtiefe sowohl der Walzenelemente als auch der Saatgutablagemittel exakt einzuhalten und unabhängig voneinander ein Ausweichen bei Bodenhindernissen zu ermöglichen. Diese Bodenhindernisse können sowohl außergewöhnlich harte Bodenstellen als auch feste Hindernisse, beispielsweise Steine sein.

Weitere Vorteile ergeben sich bei dem erfindungsgemäßen Bodenbearbeitungsgerät dadurch, daß die einzelnen Walzenelemente oder Räder einzeln aufgehängt sind. Die Walze ist somit sehr reparaturfreundlich, da bei einer Beschädigung einzelner Walzenelemente nur diese ausgewechselt werden müssen. Weiterhin kann sich die Walze Bodenunebenheiten sehr gut anpassen, zusätzlich ist ein gutes Kurvenfahrverhalten gewährleistet, da die radartigen Walzenelemente einzeln drehbar sind. Der nicht verdichtete Bodenbereich zwischen den Walzenelementen ist wesentlich lockerer, als bei Verwendung einer Walze mit einem zylindrischen Walzenmantel, wodurch die Verschlämmungsgefahr verringert wird und die Wasser- und Luftzufuhr zum Boden verbessert ist. Weiterhin ist es möglich, die Reinigung der Walze, bedingt durch die Beweglichkeit benachbarter Räder, erheblich zu steigern.

Die erfindungsgemäße Anordnung der Mittel zur Saatgutablage bringt gegenüber dem Stand der Technik den Vorteil, daß ein Ausweichen bei einem Auftreffen auf Bodenhindernisse im wesentlichen nur nach oben erfolgt, während beim stand der Technik, falls überhaupt, nur ein Ausweichen nach hinten möglich ist. Bei einem Ausweichen nach hinten wird an der jeweiligen Stelle eine größere Anzahl an Saatgut abgelegt, während bei der darauf folgenden Vorwärtsbewegung die entsprechende Saatgutmenge fehlt.

Weiterhin eröffnet die erfindungsgemäße Ausgestaltung die Möglichkeit, sowohl enge als auch weitere saatreihenabstände zu realisieren, da jedem Mittel zur Saatgutablage ein radartiges Walzenelement zugeordnet ist.

Erfindungsgemäß können die Mittel zur Saatgutablage sowohl Säschare, als auch andere Mittel, beispielsweise Auslaufrohre umfassen.

In einer besonders günstigen Weiterbildung der Erfindung ist vorgesehen, daß die Tragelemente in Form von Tragarmen ausgebildet sind, welche jeweils schwenkbar an einem Tragkörper gelagert sind, welcher wiederum lösbar mit dem Rahmen verbunden ist. Durch die separate Lagerung der Tragelemente an einem einzigen Tragkörper ist es möglich, die Kombination aus Walzenelement und Saatgut-Einbringungsmittel als eine Einheit zu handhaben und beliebig an dem Rahmen anzuordnen. Dabei ist es besonders vorteilhaft, daß der Tragkörper quer zur Fahrtrichtung verstellbar ist, so daß die einzelnen Saatreihen-Abstände in einfachster Weise vorgegeben werden können. Das erfindungsgemäße Bodenbearbeitungsgerät ist somit für die unterschiedlichsten Anwendungszwecke geeignet.

Damit die Walze, welche aus den einzelnen radartigen Walzenelementen gebildet ist, in gleichmäßiger Weise auf dem Boden abrollt und diesen streifenförmig in der gewünschten Weise verdichtet, kann es besonders günstig sein, wenn an dem Rahmen vor der Walze eine schwenkbare Planierplatte gelagert ist, welche günstigerweise gegen den Boden vorgespannt ist. Die Planierplatte dient somit dazu, den beispielsweise mittels einer Kreiselegge vorbereiteten Boden zu planieren und insbesondere über die Arbeitsbreite des Bodenbearbeitungsgerätes einheitlich auszurichten, sowie nach hinten geschleuderte Erde noch vor der Walze abzufangen.

Besonders günstig ist es erfindungsgemäß, wenn die Sämaschine an dem Rahmen gelagert ist, da dann eine gleichmäßige Abstützung der Sämaschine auf der Walze gewährleistet ist. Weiterhin ergibt sich daraus eine kompakte Bauweise des Bodenbearbeitungsgerätes, wobei dieses mit geringem Gewicht ausgebildet werden kann. Weiterhin ist es günstig, wenn die Dosiereinrichtung der Sämaschine im wesentlichen senkrecht über den Mitteln zur Einbringung des Saatgutes (Säscharen) angeordnet ist, da dann das Saatgut aus einer relativ geringen Fallhöhe mit einer kurzen Fallstrecke relativ steil nach unten geführt werden kann, wodurch sich die Sägenauigkeit erhöht.

Der Rahmen kann erfindungsgemäß entweder mit einem Dreipunkt-Anbaubock versehen sein, es ist jedoch auch möglich, den Rahmen mittels Parallel-Lenkern an einem Vorgerät, beispielsweise einer Kreiselegge zu lagern.

Zur Einstellung der Arbeitstiefe der Mittel zur Saatgutablage sowie der Eindringtiefe der Walzenelemente ist es günstig, wenn diese über eine gemeinsame Verstelleinrichtung höhenverstellbar sind, so daß sämtliche Tragarme in ihrer Neigung gemeinsam und gleichmäßig verstellt werden können. Hierdurch lassen sich konstruktive Maßungenauigkeiten o.ä. ausgleichen, so daß eine exakte Einstellung des erfindungsgemäßen Gerätes gewährleistet ist. Die gemeinsame Verstellung kann dabei beispielsweise über eine Exzenterwelle erfolgen, während die individuelle Verstellung über einzelne Stellschrauben vorgenommen werden kann. Die Exzenterwelle kann dabei so ausgebildet sein, daß die seitliche Verstellung der einzelnen Tragkörper die Verstellbarkeit nicht beeinträchtigen, da die Exzenterwelle parallel zu dem Rahmen angeordnet ist.

Die der Walze vorgeordnete Planierplatte kann beispielsweise aus einzelnen Segmenten bestehen, wobei diese Konstruktion insbesondere bei sehr großen Maschinenbreiten vorteilhaft ist. Weiterhin kann die Planierplatte abschnittsweise in einem Winkel bis zu 20° von einem Winkel von 90° zur Fahrtrichtung abweichend angeordnet werden, so daß die seitliche Verteilung verbessert wird, wobei diese Ausrichtung der Planierplatte bzw. der einzelnen Segmente der Planierplatte insbesondere den Schlepperspuren zugeordnet ist, um die durch die Schlepperspuren gebildeten Bodenrillen auszugleichen. Um eine universelle Einsetzbarkeit des Gerätes zu gewährleisten, kann die Planierplatte lösbar gelagert und beispielsweise umdrehbar ausgebildet sein, um unterschiedliche Anstellwinkel zu realisieren. Die Neigung der Planierplatte kann durch verstellbare Anschläge verändert werden, um die durch die Planierplatte erfolgende Bodenverdichtung zu beeinflußen. Die Planierplatte kann entweder federnd oder unter Verzicht auf elastische Elemente angebracht sein. Durch die Zusammenwirkung der Planierplatte und der Walze ergibt sich ein besonders ebener Ackerboden mit einer konstanteren Tiefe der von den Walzenelementen eingedrückten Rillen.

Alternativ zu der Verwendung einer Planierplatte kann auch ein ebnender, angetriebener Rotor verwendet werden.

Hinsichtlich des dem Bodenbearbeitungsgerät vorgeschalteten Vorgerätes ist es auch möglich, dieses so auszubilden, daß der Boden nur in den Streifen vorbearbeitet wird, in welchen die Walzenelemente ablaufen und das Saatgut eingelegt werden soll.

Je nach der Ausgestaltung des Vorgerätes kann es auch günstig sein, zusätzlich trotzdem eine Planierplatte zu verwenden, welche das vom Vorgerät hochgeschleuderte Erdreich auffängt und damit ein Verstopfen der Walze verhindert.

Je nach Tragfähigkeit des Bodens bzw. abhängig vom Gesamtgewicht der Gerätekombination kann diese mit zusätzlichen Stützrädern versehen sein, wodurch die Belastung der Walze beeinflußbar ist. Zweckmäßig ersetzt die erfindungsgemäße Walze die Stütz- oder Packerwalze eines Vorgerätes. Gleichfalls ist es denkbar die Walze mit einem Profil zu versehen, dessen Auflagefläche desto größer wird je tiefer dieses in den Boden einwirkt. Des weiteren ist es zweckmäßig die Breite des Profils entsprechend dem Boden zu wählen.

Die radartigen Walzenelemente können in Form elastischer Reifen ausgebildet sein, es können jedoch auch starre Kunststoffreifen verwendet werden, von welchen sich die Erde leicht löst. Weiterhin muß das Profil des Reifens nicht eine glatte Ringform haben, es sind vielmehr beliebige Profilformen möglich.

Das erfindungsgemäße Bodenbearbeitungsgerät ist universell einsetzbar, es ist zusätzlich zu der bereits beschriebenen Möglichkeit der Veränderung der Abstände der Saatreihen auch möglich, die einzelnen Saatreihen mit unterschiedlichem Saatgut zu beschicken, beispielsweise mit Getreide, und abwechselnd hierzu, einer anderen Untersaat.

Zusammenfassend ist somit festzustellen, daß erfindungsgemäß die Tragarme der radartigen Walzenelemente und die Tragarme der Säschare jeweils an Anschlägen anliegen, so daß die Eindringtiefe der Säschare gegenüber den von den Walzenelementen eingedrückten Rillen genau vorgegeben ist. Die Federkräfte sind so hoch gewählt, daß sowohl die Walzenelemente als auch die Säschare bei schweren Böden nicht von den Anschlägen abheben. Die Eindringtiefe der Walzenelemente wie auch die Eindringtiefe der Säschare ist daher von den Federkräften völlig unabhängig. Die Eindringtiefe der Walzenelemente ist lediglich vom Gesamtgewicht des Bodenbearbeitungsgerätes abhängig, sofern keine zusätzlichen, dieses abstützenden Stützräder verwendet werden. Die abgefederten Tragarme weichen nur dann nach oben aus, wenn eine Überlastung eintritt, beispielsweise durch einen Stein oder einen relativ harten Bodenbereich. Es ist erfindungsgemäß lediglich die Vorspannung der Federn ausreichend hoch zu wählen, um diese Funktion sicherzustellen. Dadurch wird bei dem Säschar neben der Schwere des Bodens auch die Fahrgeschwindigkeit berücksichtigt, im Gegensatz zu den aus dem Stand der Technik bekannten Säscharen, welche bei einer Erhöhung der Fahrgeschwindigkeit durch die vom Boden aufgebrachte Widerstandskraft angehoben werden. Demgegenüber verbleibt erfindungsgemäß die Eindringtiefe der Säschare und damit die Ablagetiefe des Saatgutes konstant. Weiterhin ergibt sich daraus der Vorteil, daß erfindungsgemäß keine Einrichtung zur schardruckverstellung notwendig ist, es reicht allein die Einstellung der Arbeitstiefe der Säschare. Wenn im Betrieb ein vorauslaufendes Walzenelement von einem Stein angehoben wird, wird das Säschar nicht bereits zusammen mit dem Walzenelement angehoben, sondern erst dann, wenn es selbst auf das Bodenhindernis auftrifft. Umgekehrt ist auch die Bewegung des Walzenelementes unabhängig von der Anhebung des Säschares.

Ein weiterer, erfindungsgemäßer Vorteil liegt darin, daß die Scharaufhängung mit einer so großen Federkraft nach unten gespannt wird, daß das Säschar nicht bereits bei kleinsten Hindernissen ausweicht und somit nicht springt, so wie dies aus dem Stand der Technik bekannt ist, bei welchem die Vorspannkraft und der Bodenwiderstand in einem Gleichgewicht stehen und somit die Säschare beim Auftreffen auf Hindernisse, beispielsweise Erdklumpen springen.

Im folgenden wird die Erfindung anhand von Ausführungsbeispielen in Verbindung mit der Zeichnung beschrieben. Dabei zeigt:
- Fig. 1: eine schematische Draufsicht eines ersten Ausführungsbeispieles des erfindungsgemäßen Bodenbearbeitungsgerätes,
- Fig. 2: eine Seitenansicht des Ausführungsbeispieles nach Fig. 1, teils im Schnitt,
- Fig. 3: eine Seitenansicht, ähnlich Fig. 2, eines weiteren Ausführungsbeispieles,
- Fig. 4: eine Detailansicht eines Ausführungsbeispieles der Mittel zur Saatgutablage,
- Fig. 5: eine schematische Seitenansicht eines weiteren Ausführungsbeispieles einer Einrichtung zur Bedeckung des Saatgutes in Form einer Krümelwalze,
- Fig. 6: eine Teil-Seitenansicht, ähnlich Fig. 2, eines weiteren Ausführungsbeispieles des erfindungsgemäßen Gerätes, und

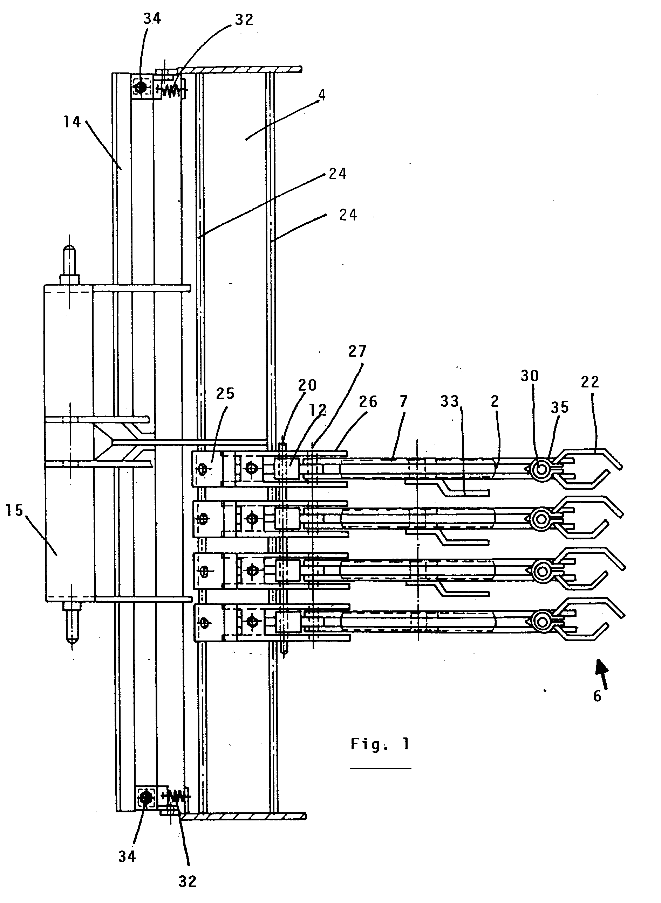

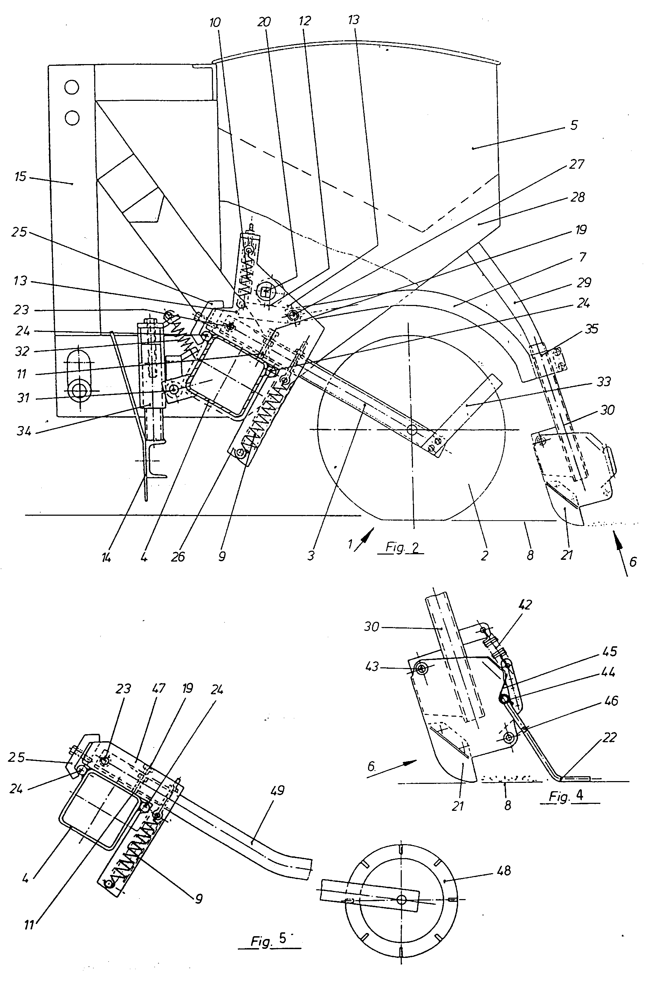

In der Fig. 1 und 2 ist in Drauf- und Seitenansicht ein erstes Ausführungsbeispiel eines erfindungsgemäßen Bodenbearbeitungsgerätes dargestellt, welches eine Walze 1 sowie Mittel 6 zur Saatgutablage aufweist. Die Walze 1 ist aus mehreren radartigen Walzenelementen 2 aufgebaut, welche jeweils einzeln mittels eines ersten Tragelementes 3 (Tragarm) gelagert sind. Das Tragelement 3 kann beispielsweise in Form einer Gabel ausgebildet sein und ist an einer Achse 23 schwenkbar an einem Rahmen 4 gelagert. Der Rahmen 4 ist in Form eines Vierkantprofiles ausgebildet, an welchem ein Tragkörper 13 befestigt ist, an welchem das Tragelement 3 mittels eines Bolzens schwenkbar angelenkt ist. Der Tragkörper 13 besteht aus zwei zueinander parallelen Platten, welche einen ausreichenden Abstand aufweisen, um das Tragelement aufzunehmen.

Der Rahmen 4 weist an seinem oberen Endbereich zwei Randwülste 24 auf, welche zur Befestigung des Tragkörpers 13 dienen. Dieser weist an der einen Seite eine Ausnehmung auf, in welche die in Fig. 2 rechts dargestellte Randwulst 24 einbringbar ist, während die andere Randwulst mittels einer an dem Tragkörper 13 verspannbaren Klemmbacke 25 geklemmt ist. An einem nach unten weisenden Schenkel 26 des Tragkörpers 13 ist eine Feder 9 gelagert, deren anderes Ende an das Tragelement 3 angehängt ist, um dieses nach unten, d.h. gegen den Boden 8 vorzuspannen. Eine Einstellung der Endlage des Tragelementes 3 bildet ein Anschlag 11, welcher über eine Einstellvorrichtung 19 in Form einer mit einer Gegenmutter gesicherten Schraube einstellbar ist. Somit ist das Tragelement 3 nach oben verschwenkbar, wenn eine ausreichende Kraft auf das Walzenelement 2 aufgebracht wird, während das Walzenelement 2 in der normalen Betriebsstellung durch die Feder 9 gegen den Anschlag 11 nach unten gedrückt wird.

Am oberen Bereich des Tragkörpers 13 ist ein zweites Tragelement 7 in Form eines Tragarmes schwenkbar gelagert, welches an seinem freien Ende eine Säschar 21 trägt. Das Tragelement 7 ist an einer Schwenkachse 27 an dem Tragkörper 13 gelagert und weist einen, in Bewegungsrichtung gesehen, nach vorne verlängerten Schenkel auf, an welchem eine Feder 10 angreift, die mit ihrem anderen Ende ebenfalls an dem Tragkörper 13 angelenkt ist. Die Feder bewirkt somit eine Vorspannung des zweiten Tragelementes 7 in Richtung auf den Boden 8, so daß sich die Säschar 21 in der normalen Betriebsstellung in einer bestimmten Arbeitstiefe befindet. Bei einem Auftreffen auf Hindernisse kann die Säschar 21 nach oben verschwenken. Als Anschlag 12 dient bei dem zweiten Tragelement 7 ein Exzenter, welcher Teil einer zweiten Einstellvorrichtung 20 bildet. Diese umfaßt eine sich parallel zu dem Rahmen 4 erstreckende Welle, welche verdrehbar ist, um auf diese Weise sämtliche zweiten Tragelemente 7 in der Höhe einzustellen. Bei dem erfindungsgemäßen Gerät sind bevorzugterweise in der gleichen Anzahl Walzenelemente und Säschare vorgesehen.

Seitlich an dem Rahmen 4 sind Seitenplatten 28 befestigt. Die Seitenplatte 28 ist in Fig. 1 im Schnitt dargestellt, um die restliche Konstruktion sichtbar zu machen. Zwischen den beiden Seitenplatten 28 ist eine Sämaschine 5 gelagert, welche über einen Schlauch 29 mit einem Saatrohr 30 verbunden ist, durch welches in üblicher Weise Saatgut in den Boden 8 geleitet werden kann.

In Fahrtrichtung vor der Walze 1 ist eine Planierplatte 14 vorgesehen, welche an einem Lagerpunkt 31 schwenkbar an dem Rahmen 4 gelagert ist. Mittels einer Feder 32, welche sowohl am Rahmen 4 als auch an einem oberen Bereich der Aufhängung der Planierplatte 14 eingehängt ist, wird die Planierplatte 14 gegen die Fahrtrichtung vorgespannt, sie kann jedoch beim Auftreffen auf Bodenhindernisse nach hinten ausweichen.

Der Rahmen 4 ist mit einem Dreipunkt-Anbaubock 15 verbunden, welcher über obere Streben zusätzlich mit der Sämaschine 5 verbunden ist.

Zwischen den einzelnen Walzenelementen 2 können weiterhin Abstreifer 33 vorgesehen sein, um Verunreinigungen zwischen den Walzenelementen zu beseitigen.

Wie sich weiterhin aus Fig. 2 ergibt, ist die Arbeitstiefe der Planierplatte 14 mittels einer teleskopartigen Stütze 34 einstellbar, an welcher die Planierplatte 14 gelagert ist. Durch Verstellung der Länge der Stütze 34 kann somit die Höhenlage der Planierplatte 14 einjustiert werden. Durch die Befestigung des Tragkörpers 13 an dem Rahmen 4 und die Lagerung des ersten und des zweiten Tragelementes 3,7 an dem Tragkörper ist es möglich, die Tragelemente zusammen mit dem Tragkörper seitlich relativ zu dem Rahmen 4 zu verstellen, um dadurch die Abstände zwischen den einzelnen Walzenelementen einzujustieren.

Weiterhin ist anzumerken, daß die Höhe der Säschare 21 zusätzlich im Bereich eines Klemmeschuhs 35 einstellbar ist, mit Hilfe dessen das Saatrohr 30 geklemmt ist.

Die Fig. 2 zeigt somit eine Ausgestaltung, bei welcher die Sämaschine fest auf der Walze bzw. einem Traggestell aufgebaut ist. Auf die Darstellung weiterer Details, beispielsweise eines Antriebsrades für die Dosiereinrichtung der Sämaschine oder eines ähnlichen Antriebes wurde in der Darstellung gemäß Fig. 2 verzichtet. Erfindungsgemäß ist jedoch die Einbringung des Saatgutes von besonderer Bedeutung, so daß die Mittel zur Saatgutablage auch einen Zustreicher 22 umfassen müssen, welcher im einzelnen in Fig. 4 gezeigt ist.

Das in Fig. 2 gezeigte Gerät kann beispielsweise mit einer Kreiselegge kombiniert werden, wobei die Walze 1 an die Stelle der sonst üblichen Stützwalze tritt. Die Ankoppelung an die Kreiselegge kann über das Dreipunkt-Gestänge erfolgen, wobei eine Einrichtung vorzusehen ist, mit Hilfe derer die Kreiselegge auf der Walze 1 abstützbar ist. Beispielsweise können sich die Unterlenker während des Betriebes an höhenverstellbaren Anschlägen anlegen, so wie dies bei Tragarmen von Walzen üblich ist. Falls eine Einrichtung zur Höhenverstellung der Kreiselegge oder eines beliebigen anderen Vorgerätes ausschaltbar ist, kann die mit der Walze 1 versehene Sämaschine 5 auch hydraulisch gegenüber dem Vorgerät nach oben und nach vorn geschwenkt werden, um eine günstige Schwerpunktlage für den Transport einzunehmen.

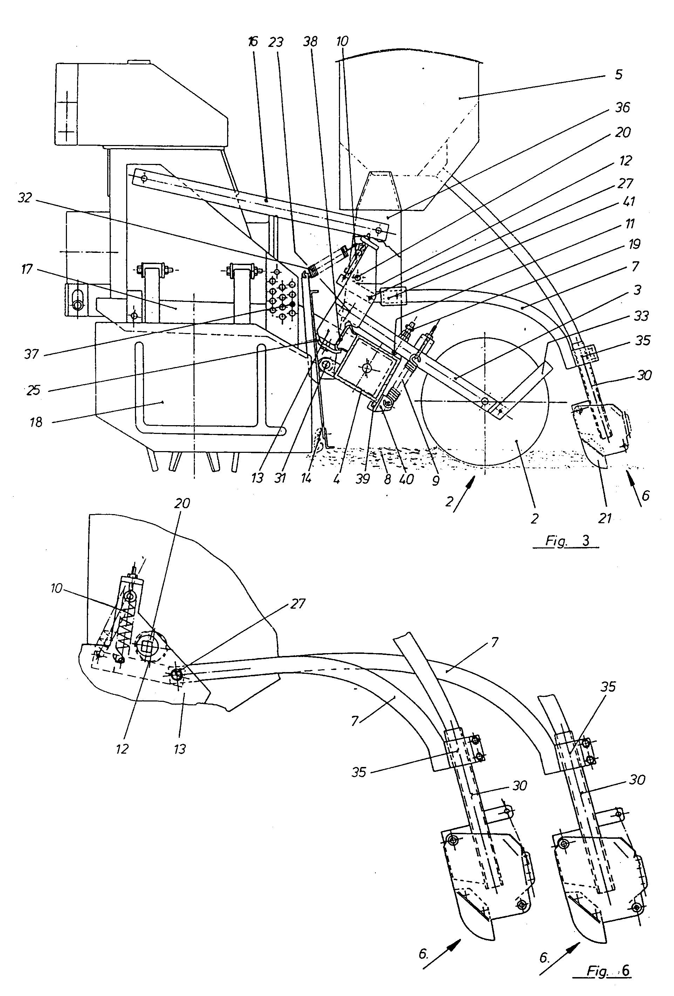

In Fig. 3 ist ein weiteres Ausführungsbeispiel dargestellt, bei welchem gleiche Bauelemente mit gleichen Bezugsziffern versehen sind. Das Ausführungsbeispiel gemäß Fig. 3 unterscheidet sich dadurch, daß die Sämaschine 5 von der Walze 1 abnehmbar ist. Zu diesem Zwecke sind an dem Rahmen 4 seitliche Stützen 36 vorgesehen, deren obere Enden in entsprechende Taschen der Sämaschine 5 einsteckbar sind.

Der sich quer erstreckende Tragbalken des Rahmens 4 und die seitlichen Stützen 36 sind über Parallelogramm-Lenker 16,17 an einem Vorgerät 18 (Kreiselegge) gelagert. Eine Höhenverstellung oder Höheneinstellung erfolgt über versetzbare Anschläge 37, welche am Gehäuse oder an der Tragkonstruktion des Vorgerätes 18 angebracht sind.

Die Fig. 3 zeigt weiterhin eine alternative Befestigungsmöglichkeit des Tragkörpers 13 an dem Rahmen 4. Der Rahmen 4 weist ein Klemmprofil 38 auf, an welchem der Tragkörper 13, ähnlich wie bei dem in Fig. 2 gezeigten Prinzip, lösbar klemmbar ist. Die Feder 9 ist an einer unteren Wulst 39 mittels eines Lagerelementes 40 eingehängt.

Um ein Abnehmen der Sämaschine 5 und der mit dieser verbundenen Säscharen 21 zu ermöglichen, sind die zweiten Tragelemente 7 an dem Tragkörper 13 mittels einer Tasche 41 gelagert, welche wiederum schwenkbar an dem Tragkörper 13 angelenkt ist. Eine Sicherung der Tragelemente 7 erfolgt über einen im einzelnen nicht dargestellten Bolzen.

Bei dem in Fig. 4 gezeigten Ausführungsbeispiel ist an dem unteren Ende der Planierplatte 14 ein Winkeleisen befestigt, welches höhenverstellbar an der Platte 14 gelagert sein kann, um auf diese Weise die Arbeitshöhe einzustellen.

Auch bei diesem Ausführungsbeispiel erstreckt sich der Tragbalken des Rahmens 4 über die gesamte Maschinenbreite.

Die Fig. 4 zeigt im einzelnen die Ausgestaltung der erfindungsgemäßen Mittel zur Saatgutablage, welche von entscheidender Bedeutung sind, da die genaue Einstellung der Arbeitstiefe der Walzenelemente und der Mittel zur Saatgutablage letztendlich dazu dienen, das Saatgut in gezielter und reproduzierbarer Weise in den Boden 8 einzubringen. Das Säschar 21 ist am Lagerpunkt 43 schwenkbar am Ende des Saatrohres 30 gelagert und wird mittels einer Feder 42 in die Arbeitsstellung vorgespannt. Bei einem kurzzeitigen Zurückstoßen des Gerätes kann das Säschar 21 um den Lagerpunkt 43 etwas kippen, ohne daß es mit Erde verstopft. An dem Lagerpunkt 44 ist der Zustreicher 22 schwenkbar gelagert, welcher mittels einer Schenkelfeder 45 gegen einen Anschlag 46 in die Arbeitsstellung vorgespannt ist. Das untere Ende des Zustreichers 22 besteht aus zwei nach unten reichenden, seitlich neben dem Schar angeordneten Schenkeln, die ungefähr horizontal abgebogen sein können, wobei diese Schenkel schräg zur Fahrtrichtung gebogen sind, so daß sie schneepflugähnlich Erdreich in die gedrückte Rille streichen. Die Zustreicher können aber auch andere Formen aufweisen und können zusätzlich auch höhenverstellbar ausgebildet sein. Hinter den Scharen kann sich auch ein Striegel befinden, wobei federnde Zinken an einem quer zur Fahrtrichtung angeordneten Balken angebracht sind. Es wäre auch möglich, eine Schleppschiene zu verwenden, die das Saatgut, bedingt durch die gleichmäßige Eindringtiefe der Säschare und der Walzenelemente gleichmäßig mit Erde bedecken kann.

In Fig. 5 ist in der Detailansicht ein Ausführungsbeispiel für eine Einrichtung zur Bedeckung des Saatgutes in Form einer Krümelwalze 48 dargestellt. Diese ist an Tragelementen 49 gelagert, welche wiederum schwenkbar jeweils an einem Tragkörper 47 gelagert sind. Die Befestigung und Anlenkung der Tragelemente 49 an den Tragkörpern 47 entspricht im wesentlichen der in Fig. 2 gezeigten Ausgestaltung, weshalb gleiche Bauelemente mit gleichen Bezugsziffern versehen sind.

Bei dem Ausführungsbeispiel gemäß Fig. 3 ist der Saatkasten der Sämaschine 5 auf den Rahmen 4 aufgesetzt. Der Saatkasten ist damit direkt auf der Walze abgestützt. Eine Halteeinrichtung für den Saatkasten kann allerdings auch direkt an der Rückseite des Turms der Kreiselegge vorgesehen sein, so daß in der ausgehobenen Stellung die vom Saatkasten herrührende Gewichtsbelastung direkt in des Dreipunkt-Gestänge des Schleppers geleitet wird. Falls eine pneumatische Sämaschine mit einem zentralen Saatgutkasten verwendet wird, ist die Anbringung und Abstützung des Saatkastens direkt am Turm der Kreiselegge günstig.

Die Fig. 6 zeigt eine weitere schematische Seitenansicht (in Teilansicht) eines Ausführungsbeispieles ähnlich Fig. 2, welches sich von dem in Fig. 2 gezeigten Ausführungsbeispiel dadurch unterscheidet, daß die Säschare in zwei Reihen angeordnet sind. Es ist auch möglich, die Säschare in drei Reihen anzuordnen. Die mehrreihige Säscharanordnung ist insbesondere im Hinblick auf die auftretende Verstopfungsgefahr besonders vorteilhaft. Um bei der mehrreihigen Anordnung der Säschare eine exakte Einstellung der Arbeitstiefe vornehmen zu können, ist bei dem in Fig. 6 gezeigten Ausführungsbeispiel vorgesehen, daß die Tragelemente 7 der Säschare an einer gemeinsamen Schwenkachse 27 gelagert sind. Wie bei dem in Fig. 2 gezeigten Ausführungsbeispiel ist das freie, sich über die Schwenkachse 27 in Arbeitsrichtung nach vorne erstreckende Ende des jeweiligen Tragarmes 7 mittels einer Feder 10 gegen einen Anschlag 12 vorgespannt, welcher in Form der bereits beschriebenen Exzenterwelle 20 ausgebildet ist. Da die Schardruckverhältnisse der zweiten Reihe gleich sein müssen zu den Verhältnissen der ersten Reihe und eine gleiche Feder zu verwenden ist, ergibt sich die Notwendigkeit, die Abstützung des Tragarmes 7 an dem Anschlag 12 in geeigneter Weise für die erste bzw. zweite SäscharReihe anzupassen. Um bei einer Verstellung der Exzenterwelle 20 eine gleichmäßige Höheneinstellung der Säschare in allen Säscharreihen sicherzustellen, sind deshalb die Exzenterelemente für den Tragarm der ersten Reihe und der zweiten Reihe unterschiedlich, so daß sich für die hintere Säscharreihe ein geringerer Hub ergibt, und der Hebelarm der Feder 10 für die hintere Reihe ist im entsprechenden Verhältnis nach vorn verlängert.

Sowohl bei den in den Fig. 1, 2 und 3 gezeigten Ausführungsbeispielen als auch bei dem Ausführungsbeispiel gemäß Fig. 6 können die den Säscharen folgenden Walzen zur Bedeckung des Saatgutes in Form einer Krümelwalze ausgebildet sein. Diese nachfolgenden Walzen können in Form von Einzelwalzen ausgestaltet sein, welche den einzelnen Säscharen zugeordnet sind, es ist auch möglich, mehrere Walzenabschnitte zu verwenden oder eine über die gesamte Maschinenbreite reichende Walze. Anstelle einer Krümelwalze kann auch eine einfache Druckwalze verwendet werden. Diese Krümel- bzw. Druckwalze bildet auch ein Mittel, die Belastung der Walzenelemente zu ändern.

Bei allen gezeigten Ausführungsbeispielen ist es somit auf besonders einfache Weise möglich, mittels der zentralen Einstellvorrichtung 20 die Arbeitstiefen der einzelnen Säscharen zentral und gleichmäßig zu verstellen. Dies wird durch die Drehung der über die gesamte Maschinenbreite reichenden Exzenterwelle, welche mit allen Tragelementen der Säscharen in Eingriff ist, gewährleistet. Bei der Verwendung mehrerer Reihen von Säscharen ist es selbstverständlich auch möglich, mehrere zueinander parallele Exzenterwellen vorzusehen und diese in geeigneter Weise zu koppeln. Die Verstellung der Exzenterwelle erfolgt bevorzugterweise vom Fahrersitz eines Schleppers aus, wobei die Exzenterwelle durch einen Bowdenzug oder über eine Hydraulikzylinder-Anordnung erfolgen kann.

Die Erfindung ist nicht auf die gezeigten Ausführungsbeispiele beschränkt, vielmehr ergeben sich für den Fachmann im Rahmen der Erfindung gemäß Patentanspruch 1 vielfältige Abwandlungs- und Modifikationsmöglichkeiten.

## Patentansprüche

1. Bearbeitungsgerät mit einer Walze (1), welche mehrere radartige Walzenelemente (2) umfaßt, welche jeweils mittels eines ersten Tragelementes (3) höhenveränderbar an einem Rahmen (4) gelagert sind, und mit einer nachgeordneten, mit Mitteln zur Saatgutablage (6) versehenen Sämaschine (5), wobei die Mittel zur Saatgutablage (6) mittels eines zweiten Tragelementes (7) höhenveränderbar an dem Rahmen (4) gelagert sind und wobei die Tragelemente (3,7) gegenüber dem Boden (8) mittels elastischer Elemente (9,10) gegen einen Anschlag (11,12) gepreßt sind,
dadurch gekennzeichnet, daß
jedes erste Tragelement (3) mittels eines jeweiligen ersten elastischen Elementes (9) gegen einen jeweiligen ersten Anschlag (11) gepreßt ist, daß jedes Mittel zur Saatgutablage (6) mittels eines jeweiligen zweiten Tragelementes (7) höhenveränderbar an dem Rahmen (4) gelagert ist, wobei jedes dieser zweiten Tragelemente (7) mittels eines jeweiligen zweiten elastischen Elementes (10) gegen einen jeweiligen zweiten Anschlag (12) gepreßt ist, und daß der erste Anschlag (11) über eine erste Einstellvorrichtung (19) einstellbar ist, so daß jedes Walzenelement (2) durch Verschwenken des jeweiligen ersten Tragelementes (3) mittels der ersten Einstellvorrichtung (19) höhenverstellbar ist, und/oder daß der zweite Anschlag (12) ein Teil einer zweiten Einstellvorrichtung (20) ist, so daß jedes Mittel zur Saatgutablage (6) durch Verschwenken des jeweiligen zweiten Tragelementes (7) mittels der zweiten Einstellvorrichtung (20) gegenüber dem Walzenelement (2) höheneinstellbar ist.

2. Bodenbearbeitungsgerät nach Anspruch 1, dadurch gekennzeichnet, daß die Tragelemente (3,7) in Form von Tragarmen ausgebildet sind, welche jeweils schwenkbar an einem Tragkörper (13) gelagert sind, welcher lösbar mit dem Rahmen (4) verbunden ist, insbesondere, wenn jeweils ein Tragkörper (13) ein erstes und ein zweites Tragelement (3,7) lagert.

3. Bodenbearbeitungsgerät nach Anspruch 2, dadurch gekennzeichnet, daß der Tragkörper (13) an dem Rahmen (4) quer zur Fahrtrichtung verstellbar ist.

4. Bodenbearbeitungsgerät nach einem der Ansprüche 1 bis 3, dadurch gekennzeichnet, daß an dem Rahmen (4) vor der Walze (1) eine schwenkbare Planierplatte (14) gelagert und gegen den Boden (8) vorgespannt ist.

5. Bodenbearbeitungsgerät nach einem der Ansprüche 1 bis 4, dadurch gekennzeichnet, daß die Sämaschine (5) an dem Rahmen (4) gelagert ist und insbesondere der Rahmen (4) mit einem Dreipunkt-Anbaubock (15) versehen ist.

6. Bodenbearbeitungsgerät nach einem der Ansprüche 1 bis 5, dadurch gekennzeichnet, daß der Rahmen (4) mittels Parallelogramm-Lenkern (16,17) mit einem Vorgerät (18) gekoppelt ist.

7. Bodenbearbeitungsgerät nach einem der Ansprüche 1 bis 6, dadurch gekennzeichnet, daß die Mittel (6) zur Saatgutablage und/oder die Walzenelemente (2) über eine gemeinsame Verstelleinrichtung höhenverstellbar sind.

8. Bodenbearbeitungsgerät nach einem der Ansprüche 1 bis 7, gekennzeichnet durch zusätzliche Stützräder.

9. Bodenbearbeitungsgerät nach einem der Ansprüche 1 bis 8, dadurch gekennzeichnet, daß die Mittel (6) zur Saatgutablage Säschare (21) umfassen, wobei insbesondere im Bereich der Säschare (6) gegen den Boden (8) vorspannende Zustreicher (22) gelagert sind.

10. Bodenbearbeitungsgerät nach Anspruch 9, dadurch gekennzeichnet, daß die Säschare (21) schwenkbar gelagert und gegen den Boden (8) vorgespannt sind.

11. Bodenbearbeitungsgerät nach einem der Ansprüche 1 bis 10, dadurch gekennzeichnet, daß vor der Walze (1) eine Planierwalze angeordnet ist.

12. Bodenbearbeitungsgerät nach einem der Ansprüche 7 bis 11, dadurch gekennzeichnet, daß die gemeinsame Verstelleinrichtung in Form einer sich über die gesamte Arbeitsbreite des Gerätes erstreckenden, mit den zweiten Tragelementen (7) in Eingriff stehenden mit Exzentern versehene Welle ausgebildet ist, welche bevorzugterweise von Fahrersitz eines Schleppers aus betätigbar ist.

13. Bodenbearbeitungsgerät nach Anspruch 12, dadurch gekennzeichnet, daß die Welle eine Dreheinrichtung aufweist, die eine Verstellung vom Schlepper aus zuläßt.

14. Bodenbearbeitungsgerät nach einem der Ansprüche 1 bis 13, dadurch gekennzeichnet, daß die Tragelemente (3, 7) sowohl relativ zum Boden als auch relativ zueinander einstellbar sind so daß die Säschare (6) auch zu den Walzen (2) zusteuerbar sind.

15. Bodenbearbeitungsgerät nach einem der Ansprüche 1 bis 14, dadurch gekennzeichnet, daß, den Säscharen (6) eine Walze insbesondere eine Krümelwalze (48) nachgeordnet ist, deren Tragelemente (49) entsprechend den Tragelementen (3, 7) am Rahmen befestigt sind.

## Claims

1. A working implement with a roller (1) comprising a plurality of wheel-like roller elements (2) each mounted vertically adjustably on a frame (4) by means of a first supporting element (3), and with a following sowing machine (5) and provided with means for holding seeds (6), the means for holding seeds (6) being mounted vertically adjustably on a frame (4) by means of a second supporting element (7) and the supporting elements (3, 7) being pressed towards the ground (8) by means of resilient elements (9, 10) against a stop (11, 12),
**characterised in that**
each first supporting element (3) is pressed by means of a respective first resilient element (9) against a respective first stop (11), each means for holding seeds (6) is mounted vertically adjustably on a frame (4) using a respective second supporting element (7) vertically adjustable on the frame (4), each of these second supporting elements (7) being pressed by means of a respective second resilient element (10) against a respective second stop (12), and the first stop (11) is adjustable via a first adjusting device (19), so that each roller element (2) is vertically adjustable by tilting the respective first supporting element (3) by means of the first adjusting device (19), and/or the second stop (12) is a part of a second adjusting device (2), so that each means for holding the seeds (6) is vertically adjustable by tilting the respective second supporting element (7) by means of the second adjusting device (20) towards the roller element (2).

2. A ground working implement according to Claim 1, **characterised in that** the supporting elements (3, 7) are formed in the shape of supporting arms mounted pivotably on a supporting structure (13) in each case which is connected to the frame (4) so as to be detachable, in particular if a supporting structure (13) supports a first and a second supporting element (3,7) in each case.

3. A ground working implement according to Claim 2, **characterised in that** the supporting structure (13) is adjustable on the frame (4) transversely to the direction of travel.

4. A ground working implement according to one of Claims 1 to 3, **characterised in that,** on the frame (4) in front of the roller (1), a pivotal levelling plate (14) is mounted and is pressed against the ground (8).

5. A ground working implement according to one of Claims 1 to 4, **characterised in that** the sowing machine (5) is mounted on the frame (4) and, in particular, the frame (4) is provided with a three-point attachment support (15).

6. A ground working implement according to one of Claims 1 to 5, **characterised in that** the frame (4) is linked to an preliminary implement (18) by means of a parallel linkage (16, 17).

7. A ground working implement according to one of Claims 1 to 6, **characterised in that** the means (6) for holding seeds and/or the roller elements (2) are vertically adjustable via a combined adjusting device.

8. A ground working implement according to one of Claims 1 to 7, **characterised by** additional support wheels.

9. A ground working implement according to one of Claims 1 to 8, **characterised in that** the means (6) for holding seeds comprises coulters (21), wherein, in particular in the area of the coulter, (6) furrow coverers (22) are pressed against the ground (8).

10. A ground working implement according to Claim 9, **characterised in that** the coulters (21) are mounted so as to be pivotable and are pressed against the ground (8).

11. A ground working implement according to one of Claims 1 to 10, **characterised in that** a levelling roller is arranged in front of the roller (1).

12. A ground working implement according to one of Claims 7 to 11, **characterised in that** the combined adjustable device is shaped in the form of a shaft, provided with cams and in engagement with the second supporting elements (7) and extending across the whole working width of the implement, which can be controlled preferably from the driver's seat of a tractor.

13. A ground working implement according to Claim 12, **characterised in that** the shaft has a rotating device which allows adjustment from the tractor.

14. A ground working implement according to one of Claims 1 to 13, **characterised in that** the supporting elements (3, 7) are adjustable in relation to the ground and in relation to each other so that the coulters (6) can also be steered towards the rollers (2).

15. A ground working implement according to one of Claims 1 to 14, **characterised in that** a roller, in particular a roller tiller (48), is arranged downstream of the coulters (6) and the supporting elements (49) of the roller are fastened to the frame in accordance with the supporting elements (3, 7).

## Revendications

1. Instrument de travail comportant d'une part un rouleau (1) qui est composé de plusieurs éléments cylindriques (2) comparables à des roues, dont chacun desquels est monté sur un bâti (4), de manière réglable en hauteur, au moyen d'un premier élément porteur (3), et d'autre part un semoir (5) disposé en arrière dudit rouleau (1) et muni de moyens (6) pour la distribution de semences, lesdits moyens étant montés sur ledit bâti (4), de manière réglable en hauteur, à l'aide d'un deuxième élément porteur (7), lesdits éléments porteurs (3, 7), étant poussés en direction du sol, contre une butée (11, 12) à l'aide d'élements élastiques (19, 20), caractérisé en ce que
chaque premier élément porteur (3) est poussé, à l'aide d'un premier élément élastique respectif (9), contre une première butée respective (11),
en ce que chaque moyen (6) de distribution de semences est monté sur le bâti (4), de manière réglable en hauteur, à l'aide d'un deuxième élément porteur respectif (7), chacun de ces deuxièmes éléments porteurs (7) étant poussé, à l'aide d'un deuxième élément élastique (10), contre une deuxième butée respective (12),
en ce que ladite première butée (11) est réglable, à l'aide d'un premier dispositif de réglage (19), de manière telle que chaque élément cylindrique (2) peut être réglé en hauteur par le basculement du premier élément porteur (3) respectif opéré à l'aide dudit premier moyen de réglage ((19),
et/ou en ce que la deuxième butée (12) constitue une partie d'un deuxième dispositif de réglage (12), de manière telle que le réglage en hauteur de chaque moyen (6) de distribution de semences, par rapport à l'élément cylindrique (2), peut s'effectuer par un basculement du deuxième moyen porteur respectif (7) opéré à l'aide du deuxième dispositif de réglage (20).

2. Instrument de travail agricole selon la revendication 1, caractérisé en ce que les éléments porteurs (3,7) sont réalisés en forme de bras porteurs dont chacun est monté de manière pivotante sur un support (13) lequel est relié de manière amovible au bâti (4), en particulier si un support (13), supporte respectivement un premier et un deuxième élément porteur (3,7).

3. Instrument de travail agricole selon la revendication 2, caractérisé en ce que le support (13) est monté sur le bâti (4) de façon à être déplaçable transversalement au sens de la marche.

4. Instrument de travail agricole selon l'une des revendications 1 à 3, caractérisé en ce qu'une plaque aplanisseuse pivotante (14) est montée sur le bâti (4), en avant du rouleau (1), cette plaque étant précontrainte en direction du sol (8).

5. Instrument de travail agricole selon l'une des revendications 1 à 4, caractérisé en ce que le semoir (5) est monté sur le bâti (4) et que ledit bâti (4) est muni d'un attelage amovible à trois points (15).

6. Instrument de travail agricole selon l'une des revendications 1 à 5, caractérisé en ce que que le bâti (4) est accouplé à un outillage placé en avant (18) au moyen d'un parallèlogramme à bras oscillants.

7. Instrument de travail agricole selon l'une des revendications 1 à 6, caractérisé en ce que les moyens (6) pour la distribution de semences et/ou les éléments de rouleau (2) sont réglables en hauteur à l'aide d'un dispositif de réglage commun.

8. Instrument de travail agricole selon l'une des revendications 1 à 7, caractérisé par la présence de roues-supports additionnelles.

9. Instrument de travail agricole selon l'une des revendications 1 à 8, caractérisé en ce que les moyens (6) pour la distribution de semences comprennent des socs (21), des organes (22)de fermeture de sillon précontraints vers le sol étant montée en particulier au voisinage desdits socs.

10. Instrument de travail agricole selon la revendication 9, caractérisé en ce que le soc (21) est monté de manière pivotante et précontraint en direction du sol (8).

11. Instrument de travail agricole selon l'une des revendications 1 à 10, caractérisé en ce qu'en amont du rouleau (1) est disposé un rouleau aplanisseur.

12. Instrument de travail agricole selon l'une des revendications 7 à 11, caractérisé en ce que le dispositif de réglage commun est réalisé sous la forme d'un arbre muni d'excentriques, qui s'étend sur toute la largeur utile de l'engin et est en prise avec le deuxième élément porteur (7), ledit arbre étant de préférence manoeuvrable à partir du siège du conducteur du tracteur.

13. Instrument de travail agricole selon la revendication 12, caractérisé en ce que l'arbre est muni d'un dispositif de rotation qui permet de le déplacer à partir du tracteur.

14. Instrument de travail agricole selon les revendications 1 à 13 caractérisé en ce que les éléments porteurs (3, 7) sont réglables tant par rapport au sol que l'un par rapport à l'autre, de manière telle que les socs (6) peuvent être orientés également en direction des rouleaux (2).

15. Instrument de travail agricole selon l'une des revendications 1 à 14, caractérisé en ce qu'en arrière des socs (6) est disposé un rouleau d'émottage (48), dont les éléments porteurs (49) sont fixés sur le bâti d'une manière analogue au mode de fixation des éléments porteurs (3, 7).
